(19)

**Europäisches Patentamt**
**European Patent Office**
**Office européen des brevets**

(11) **EP 3 006 103 A1**

(12) **EUROPEAN PATENT APPLICATION**

(43) Date of publication:
**13.04.2016 Bulletin 2016/15**

(51) Int Cl.:
**B01J 20/22** *(2006.01)* **B01J 20/30** *(2006.01)*

(21) Application number: **14187693.8**

(22) Date of filing: **06.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Paul Scherrer Institut**
**5232 Villigen PSI (CH)**

(72) Inventors:
• **Ranocchiari, Marco**
**4310 Rheinfelden (CH)**
• **van Bokhoven, Jeroen A.**
**8004 Zürich (CH)**

(74) Representative: **Fischer, Michael**
**Siemens AG**
**Postfach 22 16 34**
**80506 München (DE)**

(54) **Method for producing metal-organic frameworks and covalent organic frameworks**

(57)     It is the objective of the present invention to provide a method for the production of MOF or COF materials where the production can be achieved without interrupting the supply of the raw materials and waiting for the reaction to happen in the batch reactor prior to introducing new reactants. The method shall exhibit low reaction times giving a high space-time yield, which could be applied in the big-scale production of metal or covalent organic frameworks.

These objectives are achieved according to the present invention by a method for producing a metal organic framework or covalent organic framework, comprising the steps of:
a) mixing precursor components of the metal or covalent organic framework in order to achieve a reaction liquid;
b) conveying the reaction liquid continuously into a reaction chamber having a reaction path;
c) heating the reaction liquid in the reaction chamber by microwave irradiation to induce the reaction of the precursor components to the desired metal or covalent organic framework;
d) continuously drawing the so-generated metal or covalent organic framework from the reaction chamber; and
e) separating the so-generated metal organic framework from unreacted remaining reaction liquid.

The method now yields rather low reaction times thereby offering high space-time yield which will enable the big-scale production of metal or covalent organic frameworks as shown in the examples below.

Fig. 1

## Description

The present invention relates to a method for fast production and for producing large amounts of metal-organic frameworks.

Metal-organic frameworks, also known as porous coordination polymers (PCPs), are porous crystalline materials with high surface areas synthesized from inorganic units, and functionalized organic building blocks like aromatic carboxylic acids. Covalent organic frameworks (COFs) are the organic analogues where the metal is substituted by an organic or semi-metallic unit. MOFs and COFs have been used in a variety of applications such as gas sorption, catalysis and medical applications.

The conventional methods for the synthesis of metal-organic frameworks (MOFs) under solvothermal or non-solvothermal conditions are time-consuming procedures with reaction times up to several days.

Materials covered by the technology are MOFs or COFs generally defined as solid materials formed by the combination of mono or multi dentate organic linkers of formula $R_xD_y$ ($x \geq 1, y \geq 1$) with inorganic unit, which are metal or metal clusters of formula $M_wL_z$ ($w \geq 1, z \geq 0$) to give 1,2, or 3 dimensional structures of formula $[R_xD_y M_yL_z]_n$ ($n \geq 2$) where:

R = organic group of formula $C_mH_oA$ where A is H or a functionalization of type amino, amido, cyano, nitro, aldehyde, urea, thiourea, ester, carbonate, alcohol, ether, halogen, phosphine derivative, phosphine oxide derivative, imidazolium, pyridino, triazole, imidazole, phosphate, phosphoric acid.

D = donor group, which binds to the inorganic unit such as carboxylic acid, sulfonic acid, carboxylate, sulfonate, carbonyl, hydroxyl, hydroxylate, amino, ammonium, phopshino, phosphonium, pyridine and derivatives, imidazole and derivatives, phosphonate and derivatives, nitrile, boronic acid and esters

M = nothing (the organic units are connected to each other such as in COFs), any metal in any oxidation state or any semi-metal or light element.

L = ligand of type O, OH, CO, N, NO

The conventional synthesis is done by mixing the soluble metal component with the organic linker in a solvent. Self-assembly of the metal-organic frameworks occurs under heating within hours or days, where metal ions or metal-oxygen clusters are connected via the organic linkers to form a porous network.

Depending on the reactants, the resulting MOF can be a one-, two- or three-dimensional framework with microporous and/or mesoporous cavities. Even different isorecticular linkers can be used to synthesize MIXMOFs.

Their fields of application lie in adsorption, separation and catalysis. For example, pressure cylinders with MOF-5 pellets are capable of storing more propane gas than conventional ones.

Typical representatives for the metal-organic frameworks are MIL-101-NH$_2$(Al), HKUST-1, UiO-66 and UiO-66-NH$_2$. The MIL-101-NH$_2$(Al) framework consists of two types of mesoporous cages of different sizes consisting of hexagonal and pentagonal windows. As a result, it offers an excellent trade-off for $CO_2/CH_4$ separation. HKUST-1 ($Cu_3(BTC)_2$, BTC = 1,3,5-benzenetricarboxilic acid) is a microporous MOF and is currently one of the few MOFs produced in industry by BASF, also known as Basolite® C 300. The framework is a cubic lattice with three-dimensional pores with 9x9 Å diameter and is used as an effective hydrogen storage material. UiO-66 and UiO-66-NH$_2$ are zirconium-based cubic frameworks made up by octahedral and tetrahedral cages with high thermal and chemical stability.

The reaction rate of chemical reactions can be written as a function of the rate coefficient $k_r$, which is temperature-dependent as it is described by the Arrhenius equation:

$$k_r = A \; exp(E_A/R \; T)$$

with the pre-exponential factor A, the activation energy $E_A$, the universal gas constant $R$ and the temperature $T$. A reaction takes place if the energy barrier is overcome by adding enough energy to the system. Furthermore, the reaction rate typically increases as the temperature increases. In general, a system is heated through heat transfer with e.g. an oil bath or heating jacket, which is a slow and inefficient procedure, as the system is heated from the outside. As a result the walls and the liquids in contact with it are heated first.

An alternative to this conventional method is heating by microwave irradiation. Microwaves are generated by one or more magnetrons and are transmitted to an antenna from where it is dispersed in the cavity of the hardware and interacts with the sample. Therefore, microwave-assisted heating is an advantageous method as it heats more efficiently resulting in shorter heating times and therefore in lower operating and production costs. US Patent Application 20070012183 describes a semi-continuous way of the producing the MOF materials but the method disclosed does not work in a continuous flow mode. It is rather a semi-batch or stop-flow mode. Basically, a batch reactor is provided in which reactants are pumped in - reacted with microwave in a stirred batch reactor- and the products pumped out when the reaction is finished.

It is therefore the objective of the present invention to provide a method for the production of MOF materials where the production can be achieved without interrupting the supply of the raw materials and waiting for the reaction to happen in the batch reactor prior to introducing new reactants. The method shall exhibit low reaction times giving a high space-time yield, which could be applied in the big-scale production of metal-organic frameworks.

These objectives are achieved according to the present invention by a method for producing a metal organic framework or covalent organic framework, comprising the steps of:

a) mixing precursor components of the metal or covalent organic framework in order to achieve a reaction liquid;
b) conveying the reaction liquid continuously into a reaction chamber having a reaction path;
c) heating the reaction liquid in the reaction chamber by microwave irradiation to induce the reaction of the precursor components to the desired metal or covalent organic framework;
d) continuously drawing the so-generated metal or covalent organic framework from the reaction chamber; and
e) separating the so-generated metal organic framework from unreacted remaining reaction liquid.

The method now yields rather low reaction times thereby offering high space-time yield which will enable the big-scale production of metal-organic frameworks as shown in the examples below.

Typically, the precursor components are mixed with a co-solvent and/or additive such as acids and/or water. Advantageously, the reaction liquid comprises a soluble metal component, an organic linker and a solvent.

In order to realize a reaction path having a good trade-off of the heat introduced by the microwave irradiation into the reaction liquid and the through-put continuously achievable, the reaction path may be designed as a tube that is at least partially transparent for microwave irradiation.

In order to improve the process efficiency, the unreacted remaining reaction liquid can be recycled into the reaction chamber. Additionally or alternatively, the separated metal organic frameworks may be cooled while transferring the recovered heat to the reaction liquid.

Advantageous reaction conditions can be established when the ratio of the flow rate of the reaction liquid to the volume of the reaction path ranges from 0.1 $min^{-1}$ to 60 $min^{-1}$, preferably from 2 $min^{-1}$ to 30 $min^{-1}$. Additionally or alternatively, the ratio of the microwave irradiation power to the flow rate of the reaction liquid may range from $1x10^{-5}$ Ws/ml to 100 kWs/ml.

Preferred embodiments of the present invention are hereinafter explained with reference to the attached drawings which depict in:

Figure 1    schematically a setup for the continuous microwave-assisted synthesis of metal-organic frameworks;

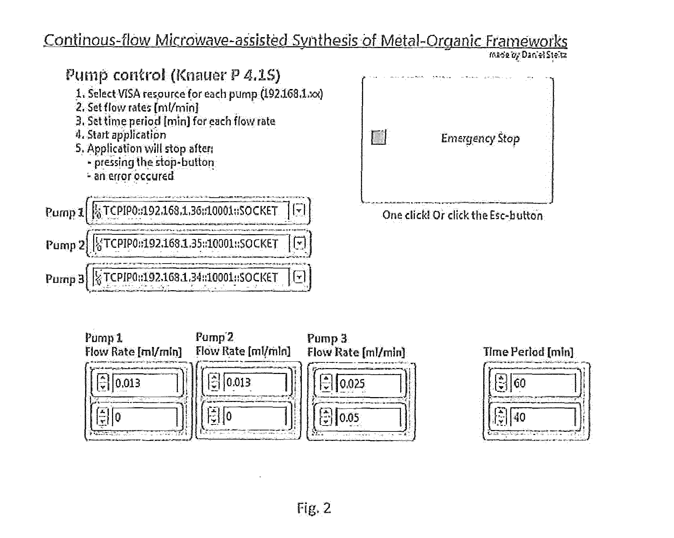

Figure 2    schematically an overview on a control panel of the pump control of the setup according to Fig. 1;

Figure 3    Nitrogen adsorption isotherms of samples DS001 (upper) and DS002 (lower);

Figure 4    Powder XRD patterns of the samples DS001 through DS003;

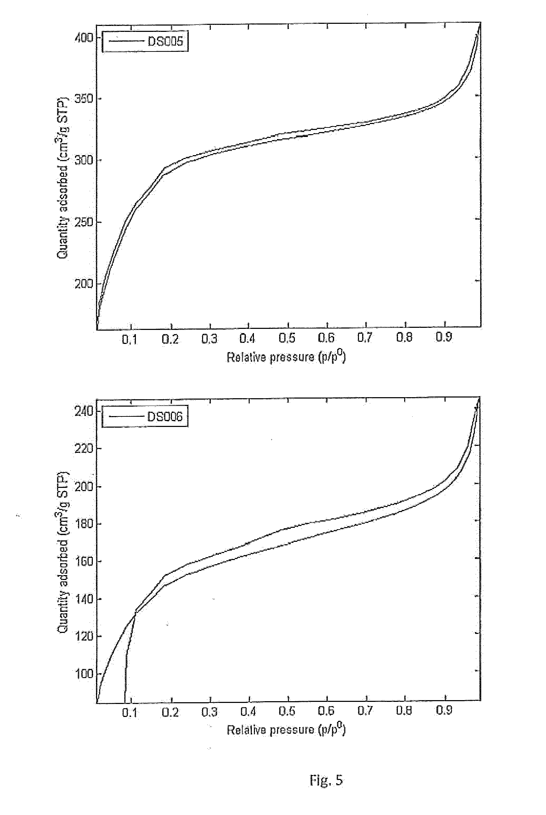

Figure 5    Nitrogen adsorption isotherms of samples DS005 (upper) and DS006 (lower);

Figure 6    SEM images of HKUST-1 samples DS007 (upper) and DS008 (lower); octahedral crystals can be seen in both images;

Figure 7    Nitrogen adsorption isotherms of samples DS007 (upper) and DS008 (lower) with hysteresis;

Figure 8    Powder XRD patterns of the HKUST-1 samples FM1851, DS007 and DS008; and

Figure 9    Nitrogen adsorption isotherms of samples DS019 (upper) and DS020 (lower).

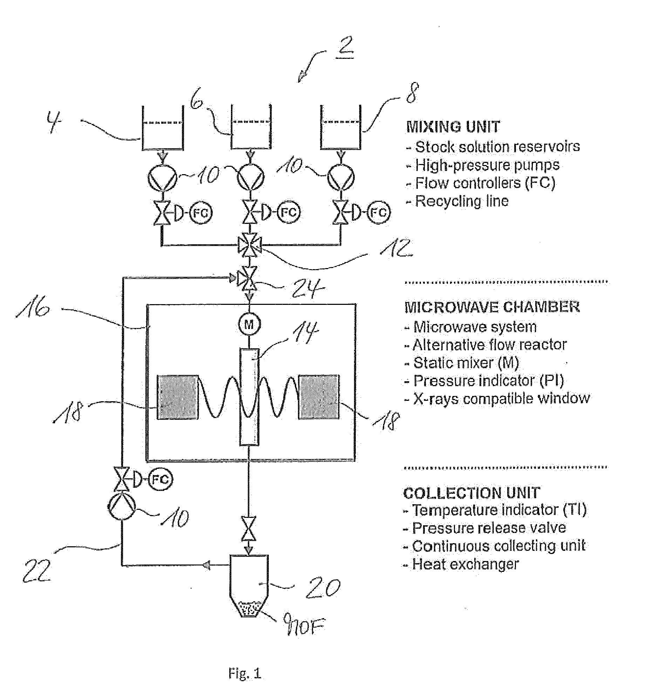

The equipment setup 2 for the continuous synthesis of MOFs is shown in figure 1. Reactants, additives and solvents were stored in different stock solution reservoirs 4 to 8, from which HPLC pumps 10 (Knauer Azura P 4.1S) pumped the liquids through back pressure regulators (BPR Assembly PEEK 500 psi) to a mixing unit 12, where all separated liquid flows were merged together in order to build a reaction liquid. After the mixing unit 12 the reaction liquid was heated in a tube 14 of a reaction chamber 16 (Tefzel Natural 1/8" x 0.062") with a microwave CEM MARS and retrieved in a collector 20 where the generated solid metal organic framework MOF is separated from the remaining reaction liquid. From the collector 20, a recycling line 22 leads via a pump 10 incl. controller to a second mixing unit 24 in order to recycle the reaction mother liquor.

The collected solid product can be separated in a centrifuge from the mother liquor and washed with different solvent and boiled in a solvent during 30 minutes for work-up. The samples were dried in a vacuum oven after work-up.

The dried samples were activated in a degasser (micromeritics VacPrep 061 Sample Degas System) and nitrogen adsorption isotherms were measured (micromeritics TriStar II 300 Surface Area and Porosity) for determination of the specific surface area. BET specific surface areas were calculated in a relative pressure range of $p/p^0$ = 0.05 to 0.3.

The setup was washed after each MOF with water, followed by a 1 M sodium hydroxide solution and 50 % acetic acid solution and flushed with sufficient amount of water.

A pump control was programmed using LABVIEW® in order to control all three HPLC pumps 10 at the same time. The pumps 10 were connected with LAN cables via a router to a laptop computer. After selecting the right IP-addresses for each pump, the flow rates for each pump could be set in a range of 0 to 10 ml/min and a time period could be chosen. Moreover, different flow gradients were possible, e.g. for flushing or cleaning purposes.

The program would start all pumps at the same time and run them at their assigned flow rates during the given time period and then change to the next flow rates. After the given time periods, the program would stop all pumps. An emergency button was included to stop the pumps at any given time.

Screening of four different MOFs was performed to study the potential of microwave-assisted MOF synthesis. The experiments considered only the parameters residence time, by varying the reactor length or flow rates, the power of the microwave, different solvents and additives.

Synthesis of MIL-101-NH$_2$(Al)

Aluminium chloride hexahydrate (1.547 g, 6.4 mmol) was dissolved with 2-aminoterephthalic acid (1.6901 g, 9.3 mmol) in 90.5 ml dry DMF and connected to a pump. The parent solution was diluted 1:1 with dry DMF from another pump. In each experiment the microwave was operated at 80 % (640 W) and different residence times were tested. The product was centrifuged, washed once with DMF and three times with ethanol, boiled in ethanol and dried in a vacuum oven. Table 1 shows MIL-101-NH$_2$(Al) samples with their different synthesis conditions.

Synthesis of HKUST-1

In a typical experiment, two solutions were prepared for the synthesis of HKUST-1. Copper(II) nitrate trihydrate (4.39 g, 18.2 mmol) and benzene-1,3,5-tricarboxylic acid (2.52 g, 12.0 mmol) were each dissolved in 30 ml of dried DMF. The solutions were connected to the pumps. Additionally dry DMF was pumped through the system for twofold dilution. In other experiments, dry DMF was switched with 1:1 H$_2$O/EtOH solution to study the influence of a polar solvent in the reaction. The microwave was operated at 50 % (400 W) and experiments were performed at different residence times.

The resulting blue suspensions were centrifuged and the liquid was decanted. The blue solid was washed once with ethanol and twice with acetone. After boiling the product 30 min in acetone, it was dried in a vacuum oven. Table 2 shows HKUST-1 samples with their different synthesis conditions.

Synthesis of UiO-66-NH$_2$

A 100 ml solution of zirconium chloride (5.14 g, 22 mmol) in DMF or H$_2$O/EtOH and a 20 ml DMF solution of aminoterephthalic acid (0.81 g, 4.5 mmol) were prepared and connected to the apparatus. The power of the microwave was set to 50 % (400 W) resp. 20 % (160 W) and the residence times were tested between 0.25 and 4 min. The product was washed three times and boiled 30 min in acetone before being dried in the vacuum oven. Table 3 shows UiO-66-NH$_2$ samples with their different synthesis conditions.

Synthesis of UiO-66

In general, the synthesis was performed by preparing zirconium chloride (1.3004 g, 5.6 mmol) and terephthalic acid (0.9026 g, 5.4 mmol) in 25 ml DMF each. Experiments were done with 80 % microwave power (640 W) with different dilutions and flow rates. Furthermore, experiments with sodium hydroxide ($10^{-6}$ M) as additive working at 40 % microwave power, 1:1 dilution with DMF and 4 minute residence time were conducted. The white product was retrieved by centrifuging and washing three times with acetone.

MIL-101-NH$_2$(Al)

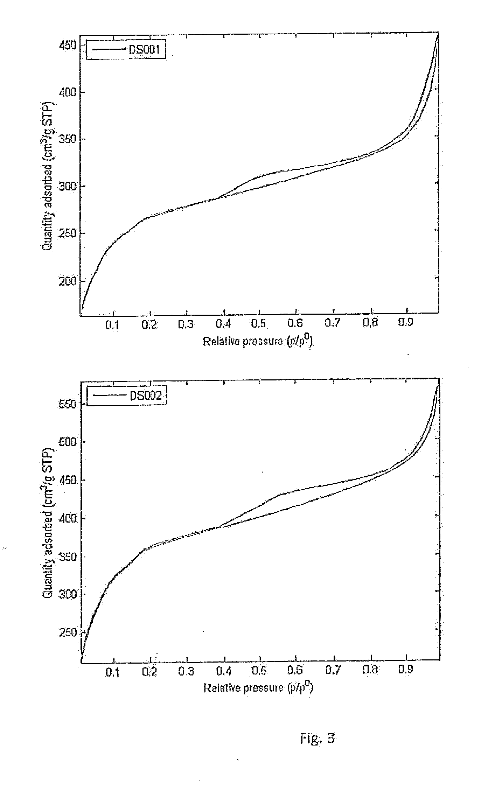

In all experiments a yellow product could be observed. After work-up of samples DS001 to DS003 it could be seen, that only 6 mg could be obtained for sample DS003 due to the low reactant concentration caused by the 1:2 dilution. Nitrogen adsorption isotherms were therefore only measured for DS001 and DS002 and resulted in BET specific surface areas of 964 $\pm$ 9 m$^2$/g and 1314 $\pm$ 10 m$^2$/g. The nitrogen adsorption isotherms show the characteristic step of the MIL-101 structure, which is attributed to the filling of the different sized cavities in the network (Fig. 3).

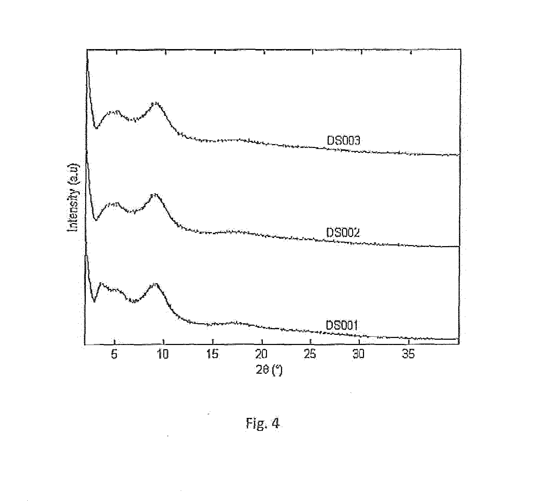

The space-time yield resulted in 884 kg/(m$^3$ d) and 546 kg/(m$^3$ d) as 35 mg and 21.6 mg were obtained from the 9.5 minute experiments in a 6 ml tube reactor. Powder XRD patterns were recorded for samples DS001 through DS003 (Fig. 4), but there were no sharp diffraction peaks observable. The product was most likely semi-amorphous and crystallization hardly occurred.

During the course of research, the length of the tube reactor was decreased leading to shorter residence times. Nitrogen adsorption isotherms measured a BET specific surface area of 1044 $\pm$ 14 m$^2$/g with a 19.4 mg yield for sample DS005 and 530 $\pm$ 7 m$^2$/g with a 23.1 mg yield for sample DS006. Space-time-yield calculations were not possible due to bursting of the reactor. A value of 3099 m$^2$/g found in literature and the poor crystallinity suggests that further optimization of the process must be performed. Longer residence times resulted in a higher BET surface areas for MIL-101-NH$_2$(Al).

HKUST-1

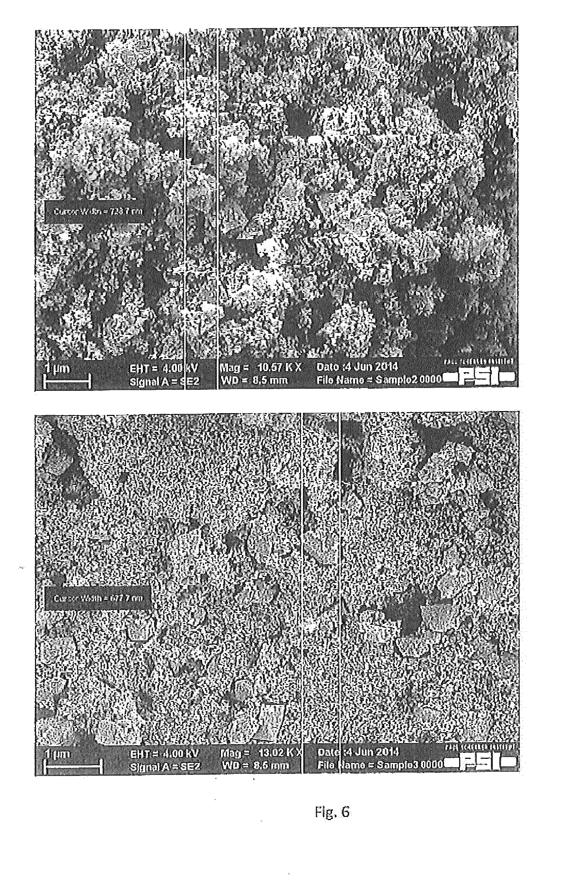

BET specific surface areas were obtained for the blue products of sample DS007 and DS008 as 992 $\pm$ 26 m$^2$/g and 744 $\pm$ 24 m$^2$/g and are comparable with the reported value of 1009 m$^2$/g in literature[8]. From the 30 and 15 minute experiments were 146.7 mg and 81.8 mg obtained in the 0.2 ml reactor and the space-time yield was calculated as 35208 kg/(m$^3$ d) and 19630 kg/(m$^3$ d). We observed that less product with lower specific surface area was obtained in the experiment with shorter residence time. It appears that only a fraction of the product was crystallised. This can be seen in the images made by a scanning electron microscope (Fig. 6). The crystal size tended to be bigger in the sample DS007 than in DS008.

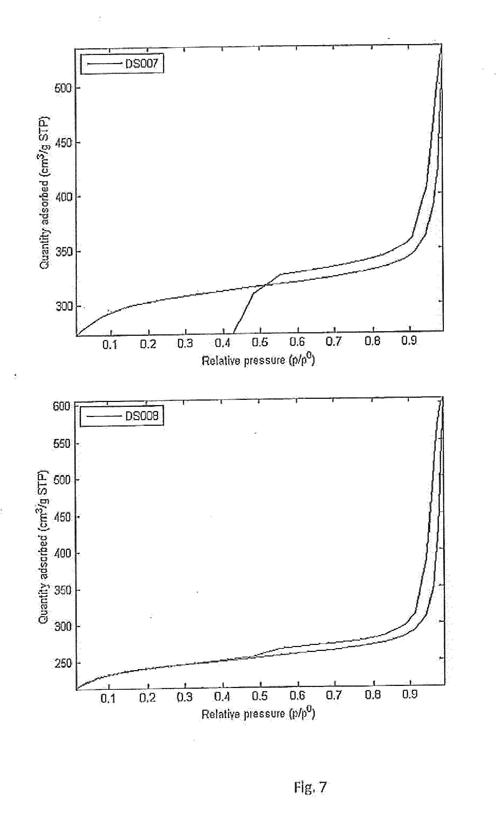

For comparison images were also taken from the sample FM1951 by Flavien Morel, which was synthesised with a residence time of 12 minutes. The crystals turned out to be much bigger than in the other two samples. Non-crystalline material could also be seen in the SEM images. One can presume that there was not enough time or poor conditions for crystallization, so that some kind of mesoporous material was formed. This mesoporous material presumably led to the hysteresis visible between the adsorption and desorption isotherms of samples DS007 and DS008 (Fig. 7), caused by condensation of nitrogen in the mesopores.

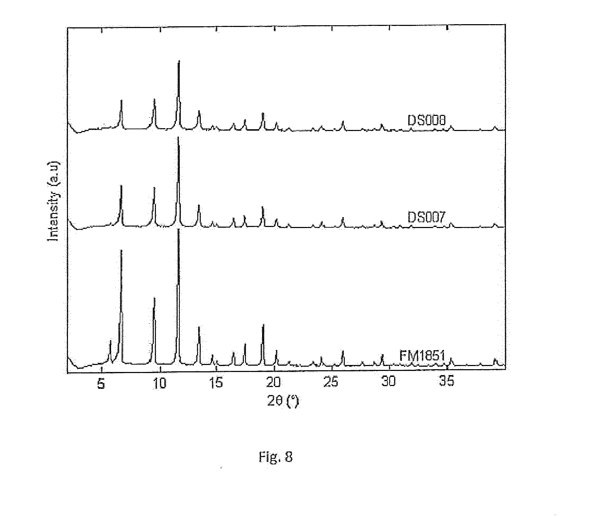

Sharp peaks were observable for all three samples in the powder XRD pattern, but shorter residence times seem to decrease the crystallinity. Sample FM1851 showed much sharper peaks than the other two samples with lower residence times (Fig. 8). Assumedly crystallinity increases as residence time increases.

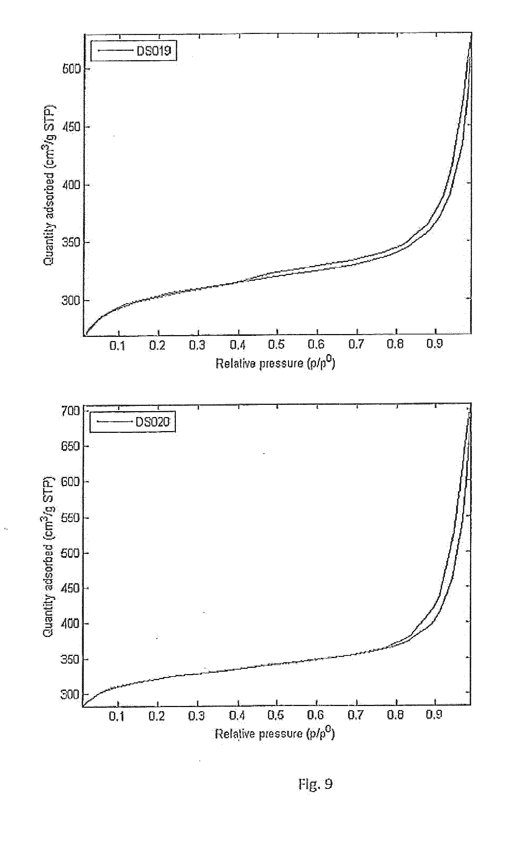

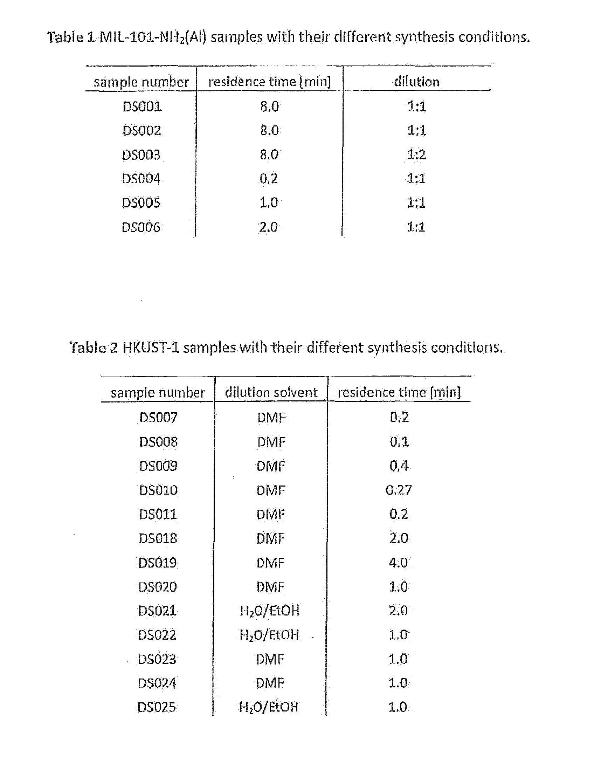

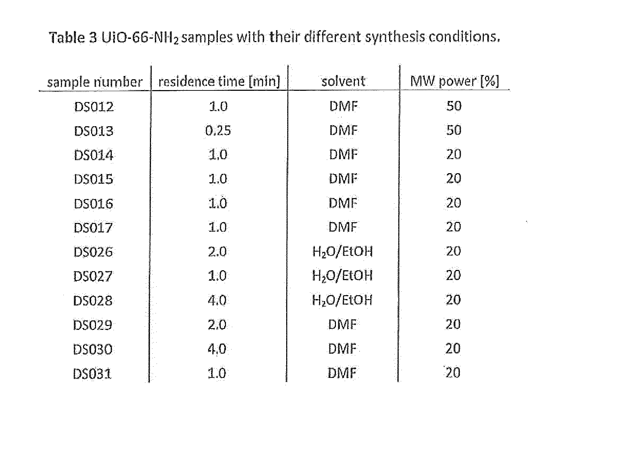

The following samples were done with longer residence times by decreasing the flow rate. Values for BET specific surface area for samples DS018, DS019 and DS020 were obtained as 1116 $\pm$ 25 m$^2$/g, 1000 $\pm$ 24 m$^2$/g and 1061 $\pm$ 25 m$^2$/g. During 40, 80 and 20 minutes in the 0.2 ml reactor were 17.5 mg, 21.4 mg and 43.0 mg of HKUST-1 obtained which gives a space-time yield of 3150 kg/(m$^3$ d), 1926 kg/(m$^3$ d) and 15480 kg/(m$^3$ d) respectively. The best result for STY and yield and satisfying BET surface area was achieved with a residence time of 1 minute as it can be seen for sample DS020. According to the adsorption isotherms, the hysteresis for sample DS019 and DS020 (Fig. 9) is much smaller compared to samples DS007 and DS008, suggesting less mesoporous material being formed.

However, the colour intensity of the mother liquors was the lowest for sample DS019, from which one could assume the highest yield for DS019. The colour intensity of the mother liquors suggest, that longer residence time lead to a higher yield as sample DS009 had a strong blue colour whereas sample DS018 had only a slight blue colouring. Using H$_2$O/EtOH as solvent seemed to be a disadvantage for the synthesis of HKUST-1 as there was no product observable in samples DS021, DS022 and DS025. It can be speculated that the hydrated copper complex is not as reactive as the complex in DMF.

UiO-66-NH$_2$

Good results were observable at all experiments with a twofold dilution of the mother liquor with cloudy yellow product suspensions. The formation of yellow product was already visible at the beginning of the reactor, so that clogging occurred. DMF worked well as solvent, but H$_2$O/EtOH was also tested (DS026, DS027 and DS028). These samples with different solvent were not compared, as nitrogen adsorption isotherms were only measured for the samples with H$_2$O/EtOH as solvent. It could be seen that the yield of the samples in DMF and H$_2$O/EtOH was comparable. Although H$_2$O/EtOH improves the heating of the reactant solution, one could argue that the hydrated precursor is not as reactive as the precursor in DMF, leading to similar yields.

The BET surface area for samples DS026 through DS028 was measured, but no satisfactory results were obtained. The colour of the product switched from yellow to orange-brown when it was activated in the degasser at 150 °C, presumably decomposing the MOF.

UiO-66

No product was obtained in the reaction without additive, because the organic linker terephthalic acid is a nonpolar symmetric molecule, which is not excited by the microwave irradiation. In the experiments with sodium hydroxide additive, a white product was observable. This implies that the ionic conduction effect of the additive improved the synthesis of UiO-66.

Conclusion

The feasibility to produce MOFs in a continuous microwave-assisted reactor has been demonstrated. All four MOFs could be synthesised via microwave heating with higher space-time yield than via conventional heating. The most sensitive parameter seems to be the residence time, which influences the yield and the sample quality. Different solvents and additives did also influence the reaction, especially for UiO-66, where no solid product was obtained without an additive. MIL-101-NH$_2$(Al) was easily obtained, but had a low crystallinity and a lower specific surface area than reported in literature. HKUST-1 can be successfully produced within minutes, but the trade-off between space-time yield and sample quality has to be cautiously considered. Longer residence times have to be applied to increases the yield and to improve the crystallinity of HKUST-1.

A laboratory multimode microwave can be used in future, because the domestic microwave works with a constant power of 800 W, where the chosen power is controlled by on/off cycles. Another possibility would be a monomode microwave having the best homogeneous irradiation, but it is more complex to operate. The reactor length should be increased, so that the pumps can operate at higher flow rates, thus achieving a better performance of the pumps for a continuous flow. Evaporation of the solvent by overheating caused a discontinuous flow in the reactor. This can be prevented by incorporating a back pressure regulator behind the reactor. It would provide a constant pressure in the reactor and a continuous flow. Determination of the sensitive parameters should be done especially for the temperature by installing a thermometer (e.g. fiber optics) into the reactor. Conversion could be monitored by titration of the mother liquor.

Most notably, it will be essential to understand the mechanism of MOF crystallization.

**Claims**

1. A method for producing metal organic frameworks (MOF)or a covalent organic frameworks (COF), comprising the steps of:

   a) mixing precursor components (4, 6, 8) of the MOF or COF in order to achieve a reaction liquid;
   b) conveying the reaction liquid continuously into a continuous flow reactor (16) having a reaction path (14);
   c) heating the reaction liquid in the continuous flow reactor by (16) microwave irradiation (18) that is subjected to the reaction liquid along the reaction path (14) in order to induce the reaction of the precursor components (4, 6, 8) to the desired MOF or COF; and
   d) continuously drawing the so-generated metal or covalent organic framework (MOF) from the continuous flow reactor (16); and
   e) separating the so-generated metal organic framework (MOF) from unreacted remaining reaction liquid and recycling the unreacted reactants and solvent.

2. The method of claim 1, wherein the precursor components (4, 6, 8) are mixed with a co-solvent and/or acids solutions and/or water.

3. The method of claim 1 or claim 2, wherein the reaction path (14) is designed as a tube that is at least partially transparent for microwave irradiation (18).

4. The method of any of the preceding claims wherein the unreacted remaining reaction liquid is recycled into the reaction chamber (16).

5. The method according to any of the preceding claims wherein the separated metal organic frameworks (MOF) is cooled while transferring the recovered heat to the reaction liquid.

6. The method according to any of the preceding claims wherein the ratio of the flow rate of the reaction liquid to the volume of the reaction path (14) ranges from 0.1 $min^{-1}$ to 60 $min^{-1}$, preferably from 2 $min^{-1}$ to 30 $min^{-1}$.

7. The method according to any of the preceding claims wherein the ratio of the microwave irradiation power to the flow rate of the reaction liquid ranges from $1 \times 10^{-5}$ Ws/ml to 100 kWs/ml.

8. The method according to any of the preceding claims, wherein the reaction liquid comprises a soluble metal component, an organic linker and a solvent.

**MIXING UNIT**
- Stock solution reservoirs
- High-pressure pumps
- Flow controllers (FC)
- Recycling line

**MICROWAVE CHAMBER**
- Microwave system
- Alternative flow reactor
- Static mixer (M)
- Pressure indicator (PI)
- X-rays compatible window

**COLLECTION UNIT**
- Temperature indicator (TI)
- Pressure release valve
- Continuous collecting unit
- Heat exchanger

Fig. 1

Continous-flow Microwave-assisted Synthesis of Metal-Organic Frameworks

made by Daniel Steitz

**Pump control (Knauer P 4.1S)**

1. Select VISA resource for each pump (192.168.1.xx)
2. Set flow rates [ml/min]
3. Set time period [min] for each flow rate
4. Start application
5. Application will stop after:
   - pressing the stop-button
   - an error occured

| | Emergency Stop |

One click! Or click the Esc-button

Pump 1  TCPIP0::192.168.1.36::10001::SOCKET ▼

Pump 2  TCPIP0::192.168.1.35::10001::SOCKET ▼

Pump 3  TCPIP0::192.168.1.34::10001::SOCKET ▼

| Pump 1 Flow Rate [ml/min] | Pump 2 Flow Rate [ml/min] | Pump 3 Flow Rate [ml/min] | Time Period [min] |
|---|---|---|---|
| 0,013 | 0,013 | 0,025 | 60 |
| 0 | 0 | 0,05 | 40 |

Fig. 2

Fig. 3

Fig. 4

Fig. 5

Fig. 6

Fig. 7

Fig. 8

Fig. 9

Table 1 MIL-101-NH$_2$(Al) samples with their different synthesis conditions.

| sample number | residence time [min] | dilution |
|---|---|---|
| DS001 | 8.0 | 1:1 |
| DS002 | 8.0 | 1:1 |
| DS003 | 8.0 | 1:2 |
| DS004 | 0.2 | 1:1 |
| DS005 | 1.0 | 1:1 |
| DS006 | 2.0 | 1:1 |

Table 2 HKUST-1 samples with their different synthesis conditions.

| sample number | dilution solvent | residence time [min] |
|---|---|---|
| DS007 | DMF | 0.2 |
| DS008 | DMF | 0.1 |
| DS009 | DMF | 0.4 |
| DS010 | DMF | 0.27 |
| DS011 | DMF | 0.2 |
| DS018 | DMF | 2.0 |
| DS019 | DMF | 4.0 |
| DS020 | DMF | 1.0 |
| DS021 | H$_2$O/EtOH | 2.0 |
| DS022 | H$_2$O/EtOH | 1.0 |
| DS023 | DMF | 1.0 |
| DS024 | DMF | 1.0 |
| DS025 | H$_2$O/EtOH | 1.0 |

Table 3 UiO-66-NH$_2$ samples with their different synthesis conditions.

| sample number | residence time [min] | solvent | MW power [%] |
|---|---|---|---|
| DS012 | 1.0 | DMF | 50 |
| DS013 | 0.25 | DMF | 50 |
| DS014 | 1.0 | DMF | 20 |
| DS015 | 1.0 | DMF | 20 |
| DS016 | 1.0 | DMF | 20 |
| DS017 | 1.0 | DMF | 20 |
| DS026 | 2.0 | H$_2$O/EtOH | 20 |
| DS027 | 1.0 | H$_2$O/EtOH | 20 |
| DS028 | 4.0 | H$_2$O/EtOH | 20 |
| DS029 | 2.0 | DMF | 20 |
| DS030 | 4.0 | DMF | 20 |
| DS031 | 1.0 | DMF | 20 |

Europäisches
Patentamt

European
Patent Office

Office européen
des brevets

# EUROPEAN SEARCH REPORT

Application Number

EP 14 18 7693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/013274 A2 (UNIV NOTTINGHAM [GB]) 23 January 2014 (2014-01-23) * page 2, paragraph 4th - paragraph 6th * * page 4, paragraph 4th * * page 5, paragraph 2nd * * page 5, last paragraph * * page 8, last paragraph - page 9, paragraph 1st * * page 12, paragraph 2nd * * page 18, paragraph 2nd * * page 22, line 1st * * figure 1 * | 1-8 | INV. B01J20/22 B01J20/30 |
| X | WO 2014/066415 A2 (TEXAS A & M UNIV SYS [US]) 1 May 2014 (2014-05-01) * page 9, line 8 - line 19 * * figures 3,4 * * page 9, line 25 - line 35 * | 1-8 | |
| A | Prof. Van Bokhoven: "ETH Zurich - D CHAB - ICB - van Bokhoven Microwave Reactors", , 9 August 2013 (2013-08-09), XP055184554, Retrieved from the Internet: URL:http://www.vanbokhoven.ethz.ch/infrastructure/MicrowaveReactor [retrieved on 2015-04-21] * the whole document * | 1-8 | |
| A | EP 0 522 828 A1 (CEM CORP [US]) 13 January 1993 (1993-01-13) * page 6, line 48 - page 7, line 4 * | 1-8 | |

**TECHNICAL FIELDS SEARCHED (IPC)**

B01J

The present search report has been drawn up for all claims

| Place of search | Date of completion of the search | Examiner |
|---|---|---|
| The Hague | 21 April 2015 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 7693

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2015

| Patent document cited in search report | | | Publication date | Patent family member(s) | | | Publication date |
|---|---|---|---|---|---|---|---|
| WO 2014013274 | A2 | | 23-01-2014 | GB<br>WO | 2519050<br>2014013274 | A<br>A2 | 08-04-2015<br>23-01-2014 |
| WO 2014066415 | A2 | | 01-05-2014 | NONE | | | |
| EP 0522828 | A1 | | 13-01-1993 | CA<br>DE<br>DE<br>EP<br>JP<br>JP<br>US | 2073201<br>69222368<br>69222368<br>0522828<br>3359052<br>H06258207<br>5215715 | A1<br>D1<br>T2<br>A1<br>B2<br>A<br>A | 11-01-1993<br>30-10-1997<br>19-03-1998<br>13-01-1993<br>24-12-2002<br>16-09-1994<br>01-06-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070012183 A